# EUROPEAN PATENT APPLICATION

(11) **EP 2 347 646 A1**
(43) Date of publication of application: **27.07.2011**
(21) Application number: 11151781.9
(22) Date of filing: 24.01.2011
(51) Int. Cl.: A01G 13/02

(54) **Growth protector for plant**

(30) Priority: 26.01.2010 FI 20105066
(71) Applicant: Varjus, Matti, 23500 Uusikaupunki (FI); Reponen, Ismo, 21100 Naantali (FI)
(72) Inventor: Varjus, Matti, 23500 Uusikaupunki (FI); Reponen, Ismo, 21100 Naantali (FI)
(74) Representative: Suominen, Kaisa Liisa

(57) **Abstract**

The invention relates to a growth protector for a plant, which is formed from a plate-like material. The growth protector comprises a growth opening arranged in the protector, wherein the stem of the plant can be fitted, and an installation slit, which extends from the edge of the growth opening to the outer edge of the protector. A container part has further been arranged in connection with the protector, in the bottom of which cavities have been arranged, which form the surface of the protector, which is meant to be against the ground.

## Description

The invention relates to a growth protector for a plant according to the preamble of the independent claim.

Saplings, young trees and bushes are often planted in gardens and parks in lawn and grass areas. After the planting, mowing the lawn around the planted plants becomes a problem. Most people want to cut the grass short also around the plants, but this is difficult, because one must at the same time be careful not to damage the stem of the planted plant. The problem is especially pronounced in common park areas, where the mowing of the lawn is often handled by seasonal workers with little professional skill. Such persons easily damage the bark of a tree with a lawn mower when trying to mow the lawn as close to the stem as possible. A tree with damaged bark, especially if it is recently planted, is very prone to die or its growth remains weaker than expected. Tree and bush seedlings can be very valuable, especially if larger seedlings are used in the plantations, whereby the economic losses can become significant.

In domestic gardens planted trees and bushes are usually tended with more care, but moving the lawn around stems is still problematic. The string of a string trimmer also damages the bark of a tree or bush when hitting it. One can try to lessen the problem by arranging a root mat or a filter fabric around the stem of the plant, which root mat or filter fabric is covered for example with wood chips or decorative stones. The placement of the root mat or the like is however difficult, and grass or weeds can often grow through the mat.

Irrigating trees and bushes is also often problematic. Water sprayed onto the root of the plant often strives to flow away from the root of the plant, often taking with it the cover material arranged at the root. This displaced cover material is aesthetically unpleasing, and may also damage the blades of a cutter when it ends up in the lawn area.

In forest plantations a seedling protector manufactured from recycled fibres is used, which has an opening for the stem of the plant and an installation slit extending from the opening to the edge of the protector for slipping the stem into the opening. The purpose of the seedling protector is to decompose quickly in nature and in practice it reduces grass growth in the immediate vicinity of the stem of the seedling only during the growing season immediately following the planting. In the following growing season the protector is usually already so decomposed that grass and weeds can grow through it. Such a protector does not improve the irrigation of the seedling.

Planted trees and bushes are also afflicted by other threats during the years following the planting, when the root system of the plant is not necessarily yet completely developed over a wide area. In winter the entire root system of the seedling can easily be destroyed by moles, whereby the plant naturally dies. Additionally rabbits, which have spread into gardens and parks, make up a new threat to the trees and bushes, because they easily dig under traditional protective nets.

In winter the freezing of the roots can also cause problems when the ground is very moist.

It is an object of the invention to eliminate or at least reduce problems appearing in prior art.

It is an object of the invention to provide a growth protector for a plant, which growth protector makes the irrigation of the plant easier and maintains the moisture in the soil surrounding the plant.

It is an object of the invention to provide a growth protector for a plant, which improves the air circulation underneath the growth protector and at the same time maintains temperature and humidity conditions underneath the protector, which conditions are beneficial for the growth of the plant.

It is an object of the invention to provide a growth protector for a plant, which makes cutting the grass or lawn easier around trees or bushes.

It is an object of the invention to provide a growth protector for a plant, by means of which problems or damages to the plant caused by seasonal changes can be minimized.

It is another object of the invention to provide protection for many years against grass growth and weeds around the stem of the plant, and to reduce the risk of mole or rabbit damages.

The invention is characterised in what is presented in the characterising part of the enclosed independent claim.

A typical growth protector for a plant according to the invention is formed from a plate-like material, and it comprises
- a growth opening arranged in the protector, wherein the stem of the plant can be fitted,
- an installation slit, which extends from the edge of the growth opening to the outer edge of the protector,
- a container part arranged in connection with the protector, and
- cavities arranged in the bottom of the container part, which cavities form the surface of the protector, which is meant to be against the ground.

Now it has surprisingly been found that by arranging a container part in connection with the protector, which container part is arranged at a distance from the growth opening, several problems relating to the irrigation of trees and bushes are solved. The irrigation water can simply be filled into the container part of the protector, whereby it cannot flow elsewhere and spread around for example cover chips, but the irrigation water is precisely directed from the container part to the root area of the plant. This also makes the rooting of planted plants easier, because when the irrigation is made easier people do it more often, and the flowing of water over a longer time from the container part onto the root of the plant ensures that the root system stays moist and promotes the growth of the roots. At the same time the protector hinders the mowing of the lawn too close to the plant stem and prevents the growing of weeds around the plant stem.

Cavities have been arranged in the bottom of the container part of the growth protector according to the invention, which cavities deviate from the plane of the bottom of the container part and form the surface of the growth protector, which is meant to be against the ground. In other words the growth protector is at these cavities in contact with the ground surface when installed into place. The outer edge of the growth protector is at the side meant to be against the ground also arranged at the same level as the bottom part of the cavities. Thus, when it is installed into place, the growth protector is in contact with the ground only at the cavities in the bottom of the container part and the outer edge. Thus a lot of air space is left between the growth protector and the ground surface, due to which air space the soil around the plant remains moist and air can circulate also underneath the protector. This air space remaining underneath the growth protector has significant meaning for the growth of the plant, because temperature and humidity conditions, which are beneficial for the growth of the plant, are formed underneath the protector, and air can further be made to circulate underneath the protector. By means of the growth protector according to the invention, so-called greenhouse conditions can be generated around the plant, whereby the growth of the plant is accelerated and the plants develop more flowers. Additionally problems caused to the plants by seasonal changes can be reduced with the aid of the growth protector. For example in spring, the sunshine warms the growth protector and simultaneously also warms the air underneath the growth protector, which in turn melts the soil around the roots of the plant, which promotes the growing of the plant. In the fall, on the other hand, the growth protector according to the invention protects the roots of the plant from early night frosts and excessive rain, so the roots of the plant cannot freeze in overly moist soil. In the winter the growth protector protects the roots from freezing snow masses.

The container part can typically be arranged at a distance from the growth opening. Thus the growth opening of the growth protector is open, leaving an open area around the plant. The open area left around the plant is advantageously filled with a breathing material, such as gravel or wood chips, so that the soil around the plant remains moist. According to an advantageous embodiment of the invention the container part is arranged by moulding rising brims from the plate-like material of the protector, which brims define the volume of the container part. A first and a second brim, which rise from the plane of the growth opening, have thus been formed from the plate-like material of the protector, which brims define the volume of the container part. The container part is thus integrated in a fixed manner to the protector and the entire protector is manufactured from the same material, advantageously in one work stage. The height of the brims is typically 40-80 mm, advantageously 50-70 mm. The volume of the container part is typically 6-15 litres, more typically 7-13 litres, most typically 9-11 litres. The container part also collects rain water, whereby the need for artificial irrigation is reduced. During hard rain, the container part collects the rained water and gradually pours it onto the root of the plant. The plants are often planted on a low mound, whereby the rain water can easily flow away from the root area of the plant, whereby the plant cannot utilize the rain water.

The cavities in the bottom part of the container part are also manufactured from the same plate-like material by moulding cavities, which deviate from the plane of the bottom of the container, in the bottom of the container. Cavities are advantageously arranged over the entire area of the bottom part of the container. The number and size of the cavities in the growth protector can vary. Cavities are for example arranged in the bottom part so that the surface area of the area formed by them, which is meant to be against the ground, is approximately 50 cm².

In an embodiment of the invention the growth opening is arranged in the container part, advantageously in the centre of it. Thus the container part comprises only one brim, which defines the volume of the container part. The installation slit thus passes through the brim of the container part, and a sealing unit has advantageously been arranged at the installation slit in the brim of the container part. In some embodiments the installation slit can be so narrow that the watertightness of the container part is sufficient, and the amount of water drizzling from the installation slit does not significantly reduce the advantages of the container part.

In another embodiment of the invention flexible shapes, such as radial slits extending radially from the growth opening toward the outer edge of the protector, have been arranged in the edge of the growth opening, and the edge parts of the growth opening are bent upwards. Thus a growth protector for a plant is provided, the growth opening of which stretches as the stem of the plant thickens. The growth protector can thus now be left in its place for a longer time than before, which ensures relief for many years for lawn moving and prevents damage to the stem of the plant. The edges of the growth opening are bent upwards, which provides a more efficient protection for the base of the stem, which is often a sensitive spot on plants, especially on budded and grafted plants. The upwards bent edges of the growth opening prevent the damaging of the stem of the plant as it grows, because the digging of the edges of the growth openings into the bark can thus be avoided. The growth protector and its upwards bent edges of the growth opening also function as a mechanical mole protector in winter, and prevent moles from getting to the base of the stem or the roots.
According to an embodiment of the invention the edges of the growth openings are bent upwards over as long a distance as possible. The edges are advantageously bent upwards 10-70 mm, more advantageously 10-50 mm, most advantageously 20-30 mm.

Between the flexible shapes, such as the radial slits, starting from the growth opening of the growth protector, weakenings may have been arranged, which join the flexible shapes, such as the radial slits, together. The weakenings improve the stretching of the growth opening as the stem of the plant grows and thickens. Two adjacent radial slits may for example have been joined together with several weakenings, which are situated at a distance from each other. The weakening may have been formed for example by reducing the thickness of the material of the growth protector at the weakening.

In another embodiment of the invention the container part may have been manufactured as a part, which is separate from the growth protector, whereby it is attached to the growth protector when it is to be used.

The water-filled container part can also function as a bird bath, where little birds in the garden or park can bathe or drink. This further improves the pleasant environment of the garden or park.

In another embodiment of the invention the container part of the growth protector can be used as a planting basin for perennials or summer flowers. Thus a beautiful flower bed can easily be provided around the planted tree or bush. Perennials which spread easily with soil runners and roots, such as for example mint species, can also be planted in the container part, because the edges of the container prevent such plants from escaping elsewhere in the garden. If other plants, such as perennials or summer flowers, have been planted in the container part, a part of the possible irrigation of the plant is performed directly into the growth opening of the protector, or near it.

Decorative stones, gravel, crushed stones, sand, wood chips or bark cover can also be arranged in the container part. In the container part these material stay in their place well, and for example the bark cover does not need to be retouched or renewed after each mowing of the lawn. The decorative or cover material, such as sand, arranged in the container part can also not flow away from around the plant for example due to rain, and cannot mix with the other soil. Thus significant savings can be made in the used amounts of expensive decorative covers. A slowly dissolving fertilizer can when necessary be arranged among the decorative or cover material. Thus the effect of the fertilizers can be directed to the plants that need it and the correct dosing of the fertilizer is easier. Repellent or poison for Spanish slugs or other garden pests can also be arranged among the decorative or cover material. Thus especially sensitive or pest-attracting plants can be protected more carefully than normally.

According to an advantageous embodiment of the invention the container part of the growth protector is arranged to surround the growth opening, and the installation slit extending from the edge of the opening to the outer edge of the protector is arranged between the first and the second end of the container part. Thus an even irrigation of the area around the stem of the plant can be ensured.

Through-holes have been arranged in the material forming the growth protector in the area of the container part, in the cavities in the bottom of the container part, i.e. in the part which in use is against the ground surface, and/or elsewhere in the bottom of the container part. These through-holes function as irrigation holes, i.e. water poured into the container part can by means of them seep or flow onto the ground surface to the area of the root part of the plant. The diameter of the through-holes can typically be about 1-10 mm, advantageously 1-7 mm, even more advantageously 2-5 mm, very advantageously 2-3 mm. It is also possible that the diameter of the through-holes is different in different parts of the container part. The diameter of the through-holes can also vary depending on if decorative and/or cover material has been arranged in the container part. If material has been arranged in the container part, the diameter of the through-holes is typically 3-5 mm.

The through-holes in the container part are advantageously arranged in the cavities, which deviate from the plane of the bottom of the container part. Alternatively the through-holes can be arranged in the centre of a bulge deviating from the plane of the container. If the through-hole is arranged in a cavity, the water can almost always pass through the through-hole into the soil. On the other hand, trash or soil can in certain circumstances accumulate in the cavity, which may diminish the passing of the water through the through-hole into the soil. Therefore the through-hole can be arranged at the top of a bulge protruding upwards from the plane of the bottom of the container part, whereby the through-hole cannot in normal circumstances be clogged. In an embodiment the container part of the growth protector comprises through-holes, some of which are arranged in a cavity deviating from the plane of the bottom of the container part, and some at the top of a bulge deviating from the plane of the container part.

Air intakes can be arranged in the growth protector according to the invention, in order to improve air circulation underneath the growth protector when it is installed into its place. Air intakes are typically arranged among others at the edges of the container part and in connection with the irrigation holes and/or support openings.

The brims of the container are formed by moulding from the material of the growth protector. The growth protector is advantageously formed to be stackable with another growth protector of the same kind. The brims of the container are thus advantageously not completely perpendicular, but the inner and outer surface of the brim are slightly diagonal against each other, whereby the cross-section of the brim becomes cone-shaped. This shape makes possible the stackability, and also promotes the pushing of frozen water away from the container part. Thus the splitting of the container part, caused by the expansion in volume of water possibly frozen in the container, can be prevented. The height of the growth protector is typically about 25-40 mm, when stacking them on top of each other.

One or more lowerings can be arranged in the inner brim of the container part, i.e. the brim closer to the growth opening, in its upper edge, whereby excessive water, which has possibly been poured into the container part or which has rained therein, primarily flows towards the stem of the plant. Gripping means, such as hooks, can also be arranged in the upper edge of the brims of the container part, advantageously in the upper edge of the outer brim, which gripping means can be used for attaching winter protection, such as a rabbit net, around the plant. The attachment of a rabbit net in a stable manner around the plant to be protected is normally rather difficult, but now this work stage is made significantly easier.

The shape and size of the growth protector can be freely selected according to need. It typically has a round or square shape. A square growth protector is especially well suited for protecting the growth areas of trees and bushes planted in a row, because a clean straight growth protector line is thus provided against the lawn or grass area, which makes the mowing of the edge area lawn significantly easier. The diameter or the longest length of the side of the growth protector is typically 400-900 mm, advantageously 500-850 mm, more advantageously 600-800 mm.

The growth protector typically comprises one growth opening, which is arranged in the centre of the growth protector. The diameter of the growth opening is normally 40-100 mm, advantageously 50-70 mm. Several growth openings, for example two or three growth openings, can also be arranged in the growth protector, whereby they are naturally not all situated in the centre of the protector, but at a suitable distance from each other. Such growth protectors are especially well suited for use in protecting the area surrounding the stem of plants planted in a row. The distance between growth openings in a protector with many openings is typically 40-70 cm.

According to an embodiment of the invention at least one support opening for a plant support has been arranged in the growth protector. There are advantageously several support openings, for example 2, 3 or 4. The support openings are advantageously arranged in the flange between the container part and the outer edge of the protector, beside the outer brim of the container part or immediately close to it. Thus an elongated cane-like plant support arranged in the support opening supports itself also on the outer brim of the container part, which makes the support structure strong and steady. A vertical groove may have been arranged in the outer brim by the support opening, so that, when installed, the plant support extends in the vertical groove, supported against the brim. The installation of plant supports into readymade holes with a diameter of 20-30 mm is easy and does not require particular force.

Cane-like plant supports arranged in the support openings can also be used for setting up thrush nets around currant bushes or cherry trees, which has so far been very difficult. They can also be used for the winter protection of plants, either to attach rabbit nets, or various protection, thermal or gauze fabrics can be attached to them, which fabrics are used for protecting plants from frost or spring sunshine. Berry bush supports can naturally also be arranged in the support openings, where the cane-like supports are joined together with a horizontal support, which prevents the branches of the berry bush from falling outward from the centre of the bush.

One plant support or several plant supports joined together on top of each other can be arranged in the support openings arranged in the growth protector. Thus the height of the plant support needed by the plant can easily be altered.

According to an advantageous embodiment of the invention the growth protector is manufactured from plastic, for example high-density polyethylene (PE-HD). The growth protector can be manufactured from recycled plastic, and it can be coloured a desired colour, for example green, whereby it blends in well with gardens and parks. A dark colour is advantageous in the growth protector, so that for example the warming effect of the sun in spring can be utilized as efficiently as possible. A growth protector manufactured from plastic can be manufactured for example by injection moulding or thermoforming, advantageously injection moulding. Used and broken growth protectors can be further recycled as raw material for new protectors. The growth protector is advantageously manufactured from a material, which is frost and winter durable, and does not become brittle in outdoor exposure. A growth protector manufactured from plastic also easily conforms to the shape of the terrain, it is light to transport, and being reasonably flexible, it is easy to arrange around a plant to be protected. The growth protector is advantageously manufactured from a material, the thickness of which is 1.5-4 mm, advantageously 2-3 mm.

Attaching protrusions, such as soil spikes, can be arranged on the side of the growth protector, which is meant to be against the ground. Thus the growth protector can easily be attached to the soil in a stable manner, for example by kicking with the foot and plunging the spikes into the soil, even if the ground is not completely even. The attaching protrusions are advantageously arranged at the support openings, at their outer edge. Thus the attaching protrusions simultaneously also support the plant support to be arranged in the support opening.

In an embodiment of the invention a deviation or curve has been arranged in the installation slit joining the growth opening and the edge of the growth protector, i.e. the installation slit is not completely straight, but the slit divides the protector so that a flap-like protrusion is formed in the first part and a corresponding gap is formed in the second one. Attaching holes for an attaching means, which attaches the edges of the protector to each other, can be arranged in the edges of the protector, advantageously at the deviation. A metallic or plastic cable tie can for example function as the attaching means. The deviation makes the breaking or snapping of the attaching means for example with an edged weapon more difficult, and thus makes stealing the protector more difficult.

The growth protector according to the invention is suited for use for trees and bushes. It is well suited for broadleaf and coniferous trees, decorative and utility trees, for example apple, pear, plum or cherry trees, maples, thujas, firs or pine trees. It is also suited for decorative or utility bushes, such as roses, lilacs, berry bushes, such as currant, gooseberry, raspberry or chokeberry. The growth protecttor is suited both for private, municipal and commercial use, and it can be used in domestic gardens, commercial gardens, for example apple orchards, parks, gardens. The growth protector is especially suited for trees and bushes to be planted, but it can also be used for protecting the fringe areas of old and established trees and bushes.

The invention also relates to a tree or bush, which is meant to be sold and not yet planted in the ground, around which a growth protector according to the invention has been arranged.

The invention is described in more detail in the following figures, in which
- Figure 1: shows a growth protector for a plant according to an embodiment of the invention illustrated from above,
- Figure 2: shows the growth protector according to Figure 1 illustrated from the bottom,
- Figure 3: shows a cross-section of the growth protector according to Figure 1 and the arrows in the figure illustrate the air circulation underneath the growth protector,
- Figure 4: shows the growth protector according to Figure 1, to which a plant support has been attached,
- Figure 5: shows a growth protector for a plant according to a second embodiment of the invention, and
- Figure 6: shows the growth protector according to Figure 5 seen straight from the side.

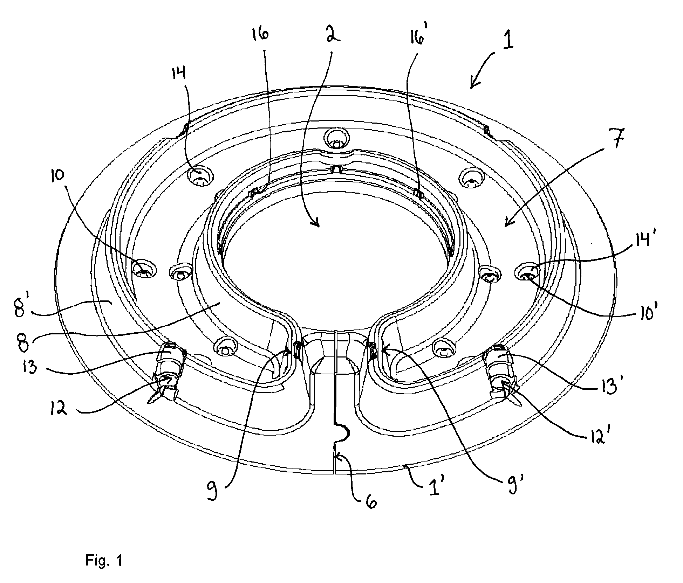

Figure 1 shows a growth protector for a plant according to an embodiment of the invention illustrated from above. A growth opening 2 has been arranged in the centre of the growth protector 1, wherein the stem of the plant can be fitted. A container part 7 has been arranged around the growth opening 2, in the bottom part of which container part cavities 14, 14' have been arranged, the bottom parts of which form the surface of the protector, which is meant to be against the ground. The outer edge 1' of the side of the growth protector, which side is meant to be against the ground, is arranged at the same level as the bottom part of the cavities 14, 14' in the bottom of the container part.

The volume of the container part 7 is defined by a first inner brim 8 and a second outer brim 8'. In the ends 9, 9' of the container part 7 the brims 8, 8' are joined together to form one volume. An installation slit 6, by means of which the growth protector is arranged around the stem of the plant, is arranged to pass between the ends 9, 9' of the container part 7. Through-holes 10, 10' have been arranged in the cavities 14, 14' in the bottom of the container part 7, by means of which through-holes water can come into contact with the soil and the roots of the plant.

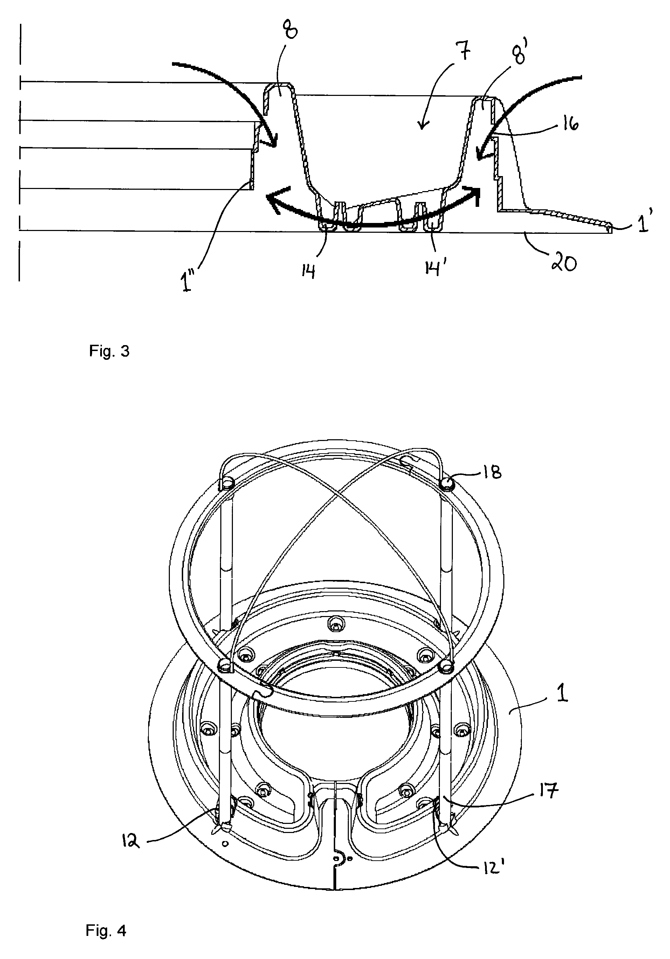

Support openings 12, 12' for plant supports (not shown) have been arranged at the base of the outer brim 8' of the container part 7. Vertical grooves 13, 13' at the support openings 12, 12' have also been arranged at the base of the outer brim 8' of the container part 7. The plant supports are pushed into the support openings 12, 12', whereby they also pass in the grooves arranged in the outer brim 8' of the container part and simultaneously support themselves on the outer brim 8'. Figure 4 shows a growth protector 1 according to the invention, in the support openings 12, 12' in the outer edge of which a plant support 17 has been arranged. It is possible to join several plant supports 17 on top of each other by means of the attaching points 18.

Air intakes 16, 16' have been arranged at the edges of the container part 7 of the growth protector and in connection with the support openings, so that air can pass better underneath the growth protector.

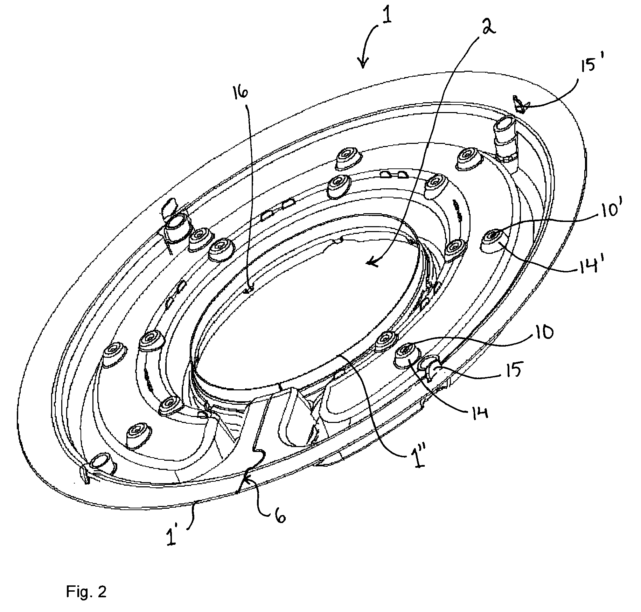

Figure 2 shows the growth protector according to Figure 1 illustrated from the bottom. The inner edge 1 " of the growth protector defines an open growth opening 2 in the centre of the protector. The cavities 14, 14' in the bottom part of the container part 7 deviate from the plane of the bottom part of the container part. Through-holes 10, 10' are advantageously arranged in connection with these cavities 14, 14'. Attaching protrusions 15, 15', such as soil spikes, can also be arranged on the side of the growth protector, which is meant to be against the ground.

Figure 3 shows a cross-section of the growth protector according to Figure 1. As can be seen in the figure, the bottom parts of the cavities 14, 14' arranged in the bottom of the container part 7 form the surface of the protector, which is meant to be against the ground 20. The outer edge 1' of the growth protector is at the same level as the bottom part of the cavities 14, 14' and thus also in contact with the ground 20. The growth protector 1 according to the invention does thus not lay against the ground over the entire surface area of the container part, but only at the cavities 14, 14', whereby air can circulate underneath the growth protector, but a sufficient amount of water to keep the soil moist underneath the growth protector can still get into the soil through the through-holes 10, 10' in the cavities 14, 14'. The inner brim 8 of the container 7 in the edge of the growth opening is advantageously not in contact with the ground, so the air circulation underneath the growth protector can be made more efficient also this way. Air gets underneath the growth protector also through the air intakes 16. In Figure 3 the air flows are illustrated with arrows.

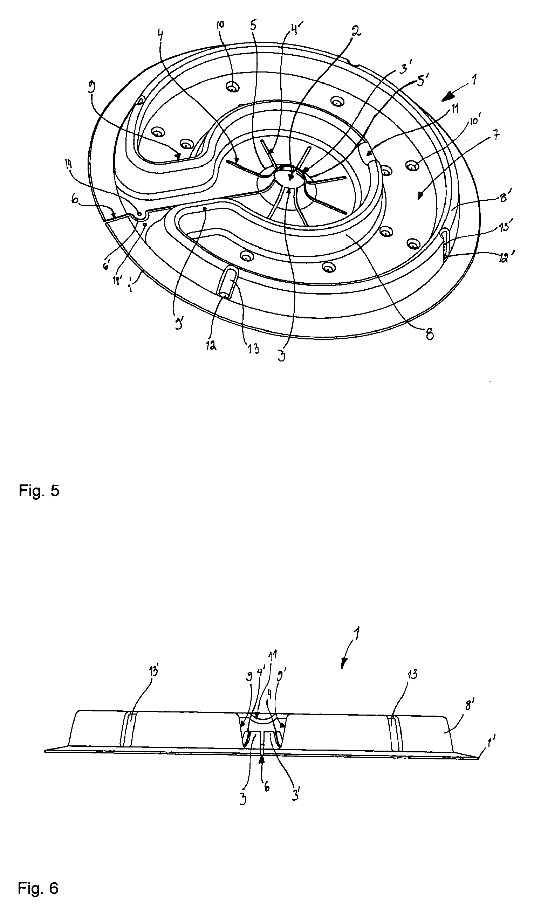

Figure 5 shows a growth protector according to a second embodiment of the invention. A growth opening 2, the edge parts 3, 3' of which have been bent upwards, has been arranged in the centre of the growth protector 1. Several radial slits 4, 4', which extend towards the outer edge 1' of the growth protector 1, have been arranged from the growth opening. Weakenings 5, 5' have been arranged between the radial slits 4, 4', by means of which weakenings the growth opening 2 of the growth protector can stretch and grow as the thickness of the stem of the plant (not shown) grows. When installed, the stem of the plant thus passes through the growth opening 2, so that the upwards bent edge parts come into contact with the stem of the plant or very close to it.

The growth protector is arranged around the stem of the plant by means of the installation slit 6. The installation slit 6 extends from the edge of the growth opening 2 to the outer edge 1' of the protector 1, and with the aid of the installation slit the growth protector 1 manufactured from a flexible material can be bent, so that the stem of the plant can be threaded along the installation slit 6 into the growth opening 2. A deviation 6' has been arranged in the installation slit, so that removing or cutting the attaching means arranged in the attaching holes 14, 14' would be as difficult as possible.

A container part 7 has been arranged at a distance from the growth opening, in the same way as has been shown already in Figure 1. Figure 5 further shows an overflow lowering 11 arranged in the upper edge of the inner brim 8 of the container part 7, in case too much water were to come into the container part 7. Thus the overflow of water would occur mainly through the lowering 11 into the centre of the protector 1.

The diameter of the area remaining inside the inner brim of the container part of the round growth protector according to what is shown in Figure 5 is typically 200-400 mm, typically about 300-350 mm. The distance between the brims of the container part is about 100-250 mm, typically 150-200 mm.

Figure 6 shows the growth protector for a plant according to the embodiment in Figure 5 seen straight from the side. The reference numbering in Figure 6 corresponds to the reference numbering in Figures 1-5.

The growth protector for a plant according to the invention can thus make care procedures following the planting of a plant, such as irrigation and lawn mowing, and outdoor area landscaping, significantly easier. The growth protector also provides protection in winter against moles and rabbits and protects the roots of the plant from freezing snow masses. The growth protector further improves the growth of the plant by maintaining the moisture in the soil surrounding the plant and reduces problems caused to the plant by seasonal changes.

## Claims

1. A growth protector (1) for a plant, which growth protector is formed from a plate-like material, and which comprises
- a growth opening (2) arranged in the protector, wherein the stem of the plant can be fitted,
- an installation slit (6), which extends from the edge of the growth opening (2) to the outer edge (1') of the protector,
**characterised in that** a container part (7) has been arranged in connection with the protector, and cavities (14, 14') have been arranged in the bottom of the container part (7), which cavities form the surface of the protector, which is meant to be against the ground.

2. The growth protector according to claim 1, **characterised in that** the outer edge (1') of the side of the protector, which is meant to be against the ground, is arranged at the same level as the bottom part of the cavities (14, 14') in the bottom of the container part.

3. The growth protector according to claim 1 or 2, **characterised in that** the container part (7) is arranged by moulding rising brims (8, 8') of the plate-like material of the protector, which brims define the volume of the container part.

4. The growth protector according to any of the preceding claims, **characterised in that** the container part (7) is arranged at a distance from the growth opening (2).

5. The growth protector according to any of the preceding claims, **characterised in that** the cavities (14, 14') in the bottom of the container part (7) are arranged by moulding from the plate-like material.

6. The growth protector according to any of the preceding claims, **characterised in that** the container part (7) is arranged to surround the growth opening (2), and that the installation slit (6) extending from the edge of the growth opening to the outer edge of the protector is arranged between the first (9) and the second end (9') of the container part.

7. The growth protector according to any of the preceding claims, **characterised in that** through-holes (10, 10') have been arranged in the material of the container part area, in connection with the cavities (14, 14') in the bottom of the container part and/or elsewhere in the bottom of the container part.

8. The growth protector according to any of the preceding claims, **characterised in that** it has a round or square shape.

9. The growth protector according to any of the preceding claims, **characterised in that** it is manufactured from plastic.

10. The growth protector according to any of the preceding claims, **characterised in that** it has been provided with at least one, advantageously several, support openings (12, 12') for plant supports (17).

11. The growth protector according to any of the preceding claims, **characterised in that** attaching protrusions (15, 15') have been arranged on the side of the protector, which is meant to be against the ground, advantageously by the support openings (12, 12').

12. The growth protector according to any of the preceding claims, **characterised in that** air intakes (16, 16') have been arranged in the container part area, on the brims (8, 8') of the container part and/or in connection with the support openings (12, 12').

13. The growth protector according to claim 10, **characterised in that** one or more plant supports (17), which are attached on top of each other, have been arranged in the support openings (12, 12').

14. The growth protector according to any of the preceding claims 1-12, **characterised in that** it is formed to be stackable with another growth protector of the same kind.

15. A tree or a bush, **characterised in that** a growth protector according to any of the claims 1-14 has been arranged around its stem.
